(19) Europäisches Patentamt
European Patent Office
Office européen des brevets

(11) EP 2 139 947 B1

(12) EUROPEAN PATENT SPECIFICATION

(45) Date of publication and mention of the grant of the patent:
**06.10.2010 Bulletin 2010/40**

(21) Application number: **08745111.8**

(22) Date of filing: **04.04.2008**

(51) Int Cl.:
***C08L 67/00*** *(2006.01)*

(86) International application number:
**PCT/US2008/059410**

(87) International publication number:
**WO 2008/124590 (16.10.2008 Gazette 2008/42)**

(54) **POLYESTER COMPOSITIONS, METHOD OF MANUFACTURE, AND USES THEREOF**

POLYESTERZUSAMMENSETZUNGEN, HERSTELLUNGSVERFAHREN UND VERWENDUNGSVERFAHREN DAFÜR

COMPOSITIONS DE POLYESTER, PROCEDE DE FABRICATION ET UTILISATIONS ASSOCIEES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.04.2007 US 697496**

(43) Date of publication of application:
**06.01.2010 Bulletin 2010/01**

(73) Proprietor: **SABIC Innovative Plastics IP B.V.**
**4612PX Bergen op Zoom (NL)**

(72) Inventors:
- **KIM, Sung Dug**
**Newburgh, IN 47630 (US)**
- **DEBNATH, Subir**
**Metairie, LA 70006 (US)**

(74) Representative: **Müller, Frank Peter et al**
**Müller Schupfner & Partner**
**Patentanwälte**
**Bavariaring 11**
**80336 München (DE)**

(56) References cited:
**WO-A-2007/103007**
**US-A- 5 723 520**
**US-A1- 2002 115 771**
**US-B1- 6 482 482**

EP 2 139 947 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

BACKGROUND

This disclosure relates to polyester compositions, in particular impact modified polyester compositions, their methods of manufacture, and uses.

Polyesters, copolyesters, and their blends with other thermoplastics have a number of advantageous properties, in particular high mechanical strength and good processability, which make them useful in a wide variety of applications. Nonetheless, there remains a continuing need in the art for methods for improving specific property combinations in polyester compositions. One such combination is improved impact properties, including Notched Izod Impact strength, ductility at Notched Izod impact, and flexural modulus. There accordingly remains a need in the art for polyester compositions that have improved impact properties.

BRIEF DESCRIPTION OF THE INVENTION

The invention relates to a polyester composition comprising, based on the total weight of the composition, a reaction product of: (a) from 65 to 94.5 weight percent of a polyester having a weight average molecular weight of greater than or equal to 70,000 g/mol, wherein the polyester is of the formula

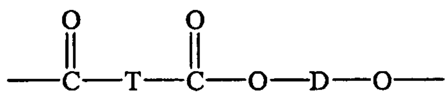

wherein each T is independently the same or different divalent $C_{6-10}$ aromatic group derived from a dicarboxylic acid or a chemical equivalent thereof, and each D is independently the same or different divalent $C_{2-4}$ aliphatic group derived from a dihydroxy compound or a chemical equivalent thereof; (b) from 5 to 30 weight percent of an impact modifier copolymer comprising units derived from a $C_{2-20}$ olefin and units derived from a glycidyl (meth)acrylate; and (c) from 0.5 to 5 weight percent of a particulate fluoropolymer encapsulated by a copolymer having a Tg of greater than 10°C and comprising units derived from a monovinyl aromatic monomer and units derived from a $C_{3-6}$ monovinylic monomer; and wherein the composition has less than 70 weight percent of a polyester derived from a dicarboxylic acid or a chemical equivalent thereof, and an aliphatic diol or a chemical equivalent thereof selected from the group consisting of 1,3-propylene glycol, neopentyl glycol, 1,5-pentanediol, 1,6-hexanediol, decamethylene glycol, cyclohexanediol, 1,4-cyclohexanedimethanol, and a combination thereof.

In another embodiment, a polyester composition comprises, based on the total weight of the composition, a reaction product of: (a) from 65 to 91.75 weight percent of a polyester having a weight average molecular weight of greater than or equal to 70,000 g/mol, wherein the polyester comprises poly(ethylene terephthalate) and/or poly(1,4-butylene terephthalate); (b) from 7.5 to 30 weight percent of an impact modifier copolymer comprising units derived from ethylene, glycidyl methacrylate, and a $C_{1-4}$ alkyl (meth)acrylate; and from 0.75 to 5 weight percent of poly(tetrafluoroethylene) encapsulated by a copolymer having a Tg of greater 10°C and comprising units derived from a styrene or styrene derivative and acrylonitrile; wherein the composition has a Notched Izod impact strength of greater than or equal to 700 J/m, and a flexural modulus of greater than or equal to 1800 MPa, each measured with 3.2 mm thick bars at 23°C in accordance with ASTM D256 and ASTM 790, respectively.

In still another embodiment a polyester composition comprises, based on the total weight of the composition, a reaction product of: (a) from 65 to 91.75 weight percent of a poly(1,4-butylene terephthalate) having a weight average molecular weight of greater than or equal to 70,000 g/mol; (b) from 7.5 to 30 weight percent of an impact modifier copolymer comprising units derived from ethylene, glycidyl methacrylate, and methyl acrylate; and (c) from 0.75 to 5 weight percent of poly(tetrafluoroethylene) encapsulated by a styrene-acrylonitrile copolymer having a Tg of greater 10°C; wherein the composition has a Notched Izod impact strength of greater than or equal to 700 J/m measured in accordance with ASTM D256, a flexural modulus of greater than or equal to 1800 MPa measured in accordance with ASTM 790, and a ductility at Notched Izod impact of greater than or equal to 80% measured in accordance with ASTM D256, each measured with 3.2 mm thick bars at 23°C.

In yet another embodiment, a polyester composition comprises, based on the total weight of the composition, a reaction product of: (a) from 85 to 95 weight percent of a poly(1,4-butylene terephthalate) having a weight average molecular weight of greater than or equal to 70,000 g/mol; (b) from 7.5 to less than 15 weight percent of an impact modifier copolymer comprising units derived from ethylene, glycidyl methacrylate, and methyl acrylate; and (c) from 0.75 to 3 weight percent of poly(tetrafluoroethylene) encapsulated by a styrene-acrylonitrile copolymer having a Tg of greater than 10°C; wherein the total amount of components (a), (b), and (c), and optionally one or more additives, is 100 wt.%;

wherein the composition has a Notched Izod impact strength of greater than or equal to 700 J/m measured in accordance with ASTM D256, a flexural modulus of greater than or equal to 1800 MPa measured in accordance with ASTM 790, and a ductility at Notched Izod impact of greater than or equal to 80% measured in accordance with ASTM D256, each measured with 3.2 mm thick bars at 23°C.

A method of forming a thermoplastic composition comprises reacting the above-described components of the polyester compositions.

Another aspect of the present disclosure relates to an article comprising the above-described polyester compositions.

Also described is a method of forming an article comprising extruding, forming, molding, or shaping the above-described thermoplastic polyester compositions.

Various other features, aspects, and advantages of the present invention will become more apparent with reference to the following Figure, description, examples, and appended claims.

## BRIEF DESCRIPTION OF THE DRAWING

Figure 1 is a plot showing the correlation between FM (flexural modulus in MPa) and NI (ASTM notched Izod in J/m), wherein open circles are data on samples with polyester, impact modifier, and TSAN, and solid triangles are data on samples without TSAN.

## DETAILED DESCRIPTION OF THE INVENTION

The present inventors have discovered that polyester compositions with improved impact properties, in particular low temperature notched Izod impact, ductility, and flexural modulus can be obtained using specific combination of certain polyesters, impact modifiers, and a particulate, encapsulated fluoropolymer. In one embodiment, articles molded from the inventive polyester composition have (1) a Notched Izod impact strength of greater than or equal to 700 J/m, and (2) a flexural modulus of greater than or equal to 1800 MPa, each measured with 3.2 mm thick bars at 23°C in accordance with ASTM D256 and ASTM D790, respectively. Articles molded from the composition can also have a ductility at Notched Izod impact of greater than or equal to 80%, measured with 3.2 mm thick bars at 23°C in accordance with ASTM D256.

The singular forms "a," "an," and "the" include plural referents unless the context clearly dictates otherwise. The terms "first," "second," and the like herein do not denote any order, quantity, or importance, but rather are used to distinguish one element from another. As used herein, the "(meth)acryl" prefix includes both the methacryl and acryl. Unless defined otherwise, technical and scientific terms used herein have the same meaning as is commonly understood by one of skill. Compounds are described using standard nomenclature.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations. The endpoints of all ranges directed to the same component or property are inclusive of the endpoint and independently combinable.

All ASTM tests and data are from the 2003 edition of the Annual Book of ASTM Standards unless otherwise indicated.

Polyesters for use in the present compositions having repeating structural units of formula (I)

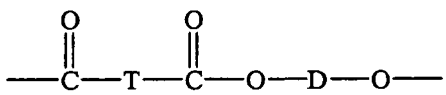

(I)

wherein each T is independently the same or different divalent $C_{6-10}$ aromatic group derived from a dicarboxylic acid or a chemical equivalent thereof, and each D is independently a divalent $C_{2-4}$ alkylene group derived from a dihydroxy compound or a chemical equivalent thereof. Copolyesters containing a combination of different T and/or D groups can be used. Chemical equivalents of diacids include the corresponding esters, alkyl esters, e.g., $C_{1-3}$ dialkyl esters, diaryl esters, anhydrides, salts, acid chlorides, acid bromides, and the like. Chemical equivalents of dihydroxy compounds include the corresponding esters, such as $C_{1-3}$ dialkyl esters, diaryl esters, and the like. The polyesters can be branched or linear.

Examples of $C_{6-10}$ aromatic dicarboxylic acids that can be used to prepare the polyesters include isophthalic acid, terephthalic acid, 1,2-di(p-carboxyphenyl)ethane, 4,4'-dicarboxydiphenyl ether, 4,4'-bisbenzoic acid, and the like,

and 1,4- or 1,5-naphthalene dicarboxylic acids and the like. A combination of isophthalic acid and terephthalic acid can be used, wherein the weight ratio of isophthalic acid to terephthalic acid is 91:9 to 2:98, specifically 25:75 to 2:98.

Exemplary diols useful in the preparation of the polyesters include $C_{2-4}$ aliphatic diols such as ethylene glycol, 1,2-propylene glycol, 1,3-propylene glycol, 1,4-butane diol, 1,2-butylene diol, 1,4-but-2-ene diol, and the like. In one embodiment, the diol is ethylene and/or 1,4-butylene diol. In another embodiment; the diol is 1,4-butylene diol.

Specific exemplary polyesters include poly(ethylene terephthalate) (PET), poly(1,4-butylene terephthalate) (PBT), poly(ethylene naphthalate) (PEN), poly(butylene naphthalate) (PBN), and poly(1,3-propylene terephthalate) (PPT). In one embodiment, the polyester is PET and/or PBT. In still another specific embodiment, the polyester is PBT. It is to be understood that such terephthalate-based polyesters can include small amounts of isopthalate esters as well.

In order to attain the desired combination of ductility at low temperature and chemical resistance, the polyester has a weight average molecular weight of greater than 70,000 g/mol, specifically 70,000 to 200,000 g/mol, against polystyrene standards, as measured by gel permeation chromatography in chloroform/hexafluoroisopropanol (5:95, volume /volume ratio) at 25°C.

The polyesters can have an intrinsic viscosity (as measured in phenol/tetrachloroethane (60:40, volume / volume ratio) at 25°C) of 0.8 to 2.0 deciliters per gram.

Other polyesters can be present in the composition (in an amount of less than 30.5 wt.% of the composition), provided that such polyesters do not significantly adversely affect the desired properties of the composition. Such additional polyesters include, for example, poly(1,4-cyclohexylendimethylene terephthalate) (PCT), poly(1,4-cyclohexylenedimethylene cyclohexane-1,4-dicarboxylate) also known as poly(cyclohexane-14-dimethanol cyclohexane-1,4-dicarboxylate) (PCCD), and poly(1,4-cyclohexylenedimethylene terephthalate-co-isophthalate) (PCTA).

Other polyesters that can be present are copolyesters derived from an aromatic dicarboxylic acid (specifically terephthalic acid and/or isophthalic acid) and a mixture comprising a linear $C_{2-6}$ aliphatic diol (specifically ethylene glycol and butylene glycol); and a $C_{6-12}$ cycloaliphatic diol (specifically 1,4-hexane diol, dimethanol decalin, dimethanol bicyclooctane, 1,4-cyclohexane dimethanol and its cis- and trans-isomers, 1,10-decane diol, and the like) or a linear poly ($C_{2-6}$ oxyalkylene) diol (specifically, poly(oxyethylene) glycol) and poly(oxytetramethylene) glycol). The ester units comprising the two or more types of diols can be present in the polymer chain as individual units or as blocks of the same type of units. Specific esters of this type include poly(1,4-cyclohexylene dimethylene co-ethylene terephthalate) (PCTG) wherein greater than 50 mol% of the ester groups are derived from 1,4-cyclohexanedimethanol; and poly(ethylene-co-1,4-cyclohexylenedimethylene terephthalate) wherein greater than 50 mol% of the ester groups are derived from ethylene (PTCG). Also included are thermoplastic poly(ester-ether) (TPEE) copolymers such as poly(ethylene-co-poly(oxytetramethylene) terephthalate. Also contemplated for use herein are any of the above polyesters with minor amounts, e.g., from 0.5 to 5 percent by weight, of units derived from aliphatic acid and/or aliphatic polyols to form copolyesters. The aliphatic polyols include glycols, such as poly(ethylene glycol) or poly(butylene glycol).

While other polyesters can be present in the compositions, it is to be understood that the compositions comprises less than 70 wt.%, specifically less than 50 wt.%, more specifically less than 30 wt.%, even more specifically less than 10 wt.% of a polyester derived from a $C_{3-20}$ dicarboxylic acid or a chemical equivalent thereof, and an aliphatic diol or a chemical equivalent thereof, wherein the aliphatic diol is 1,3-propylene glycol, neopentyl glycol, 1,5-pentanediol, 1,6-hexanediol, decamethylene glycol, cyclohexanediol, 1,4-cyclohexanedimethanol, or a combination of the foregoing diols.

In a specific embodiment, it is desirable to limit the amount of other polyesters in the composition, in order to maintain good ductility and chemical resistance. Thus, with respect to the polyester component, the composition consists essentially of from 65 to 94.5 wt.% of PET and/or PBT, and less than 30.5 wt.% of a different polyester, specifically less than 20 wt.% of a different polyester, and even more specifically less than 10 wt.% of a different polyester. In another specific embodiment, with respect to the polyester component, the composition consists essentially of from 65 to 94.5 wt.% of PET and/or PBT, and less than 30.5 wt.% of a different polyester, specifically less than 20 wt.% of a different polyester, and even more specifically less than 10 wt.% of a different polyester. In a preferred embodiment, the only polyester in the composition is PBT, with 0 to 10 wt.% of a different polyester. In another preferred embodiment, the only polyester in the composition is PBT.

The polyesters can be obtained by methods well known to those skilled in the art, including, for example, interfacial polymerization, melt-process condensation, solution phase condensation, and transesterification polymerization. Such polyester resins are typically obtained by the condensation or ester interchange polymerization of the diacid or diacid chemical equivalent component with the diol or diol chemical equivalent component with the component. The condensation reaction may be facilitated by the use of a catalyst of the type known in the art, with the choice of catalyst being determined by the nature of the reactants. For example, a dialkyl ester such as dimethyl terephthalate can be transesterified with butylene glycol using acid catalysis, to generate poly(butylene terephthalate).

It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition. The polyesters can have various known end groups. Recycled polyesters and

blends of recycled polyesters with virgin polyesters can also be used. For example, the PBT can be made from monomers or derived from PET, e.g., by a recycling process.

The polyester compositions further comprise a specific type of impact modifier in an amount of 5 to 30 wt.% of the composition. The impact modifier is an epoxy-functional copolymer comprising units derived from a $C_{2-20}$ olefin and units derived from a glycidyl (meth)acrylate. Exemplary olefms include ethylene, propylene, butylene, and the like. The olefin units can be present in the copolymer in the form of blocks, e.g., as polyethylene, polypropylene, polybutylene, and the like blocks. It is also possible to use mixtures of olefins, i.e., blocks containing a mixture of ethylene and propylene units, or blocks of polyethylene together with blocks of polypropylene.

In addition to glycidyl (meth)acrylate units, the copolymers can further comprise additional units, for example $C_{1-4}$ alkyl (meth)acrylate units. In one embodiment, the impact modifier is terpolymeric, comprising polyethylene blocks, methyl acrylate blocks, and glycidyl methacrylate blocks. Specific impact modifiers are a co- or ter-polymer including units of ethylene, glycidyl methacrylate (GMA), and methyl acrylate, available under the trade name LOTADER® resin, sold by Arkema. The terpolymers comprise, based on the total weight of the copolymer, 0.3 to 12 weight percent of glycidyl methacrylate units, more specifically 0.4 to 11 weight percent of glycidyl methacrylate units, even more specifically 0.5 to 10 weight percent of glycidyl methacrylate units. Suitable impact modifiers include the ethylene-methyl acrylate-glycidyl methacrylate terpolymer comprising 8 weight percent glycidyl methacrylate units available under the trade name LOTADER AX8900.

The polyester compositions further comprise from 0.5 to 5 wt.% of a particulate fluoropolymer, in particulate an encapsulated fluoropolymer. The fluoropolymer can be a fibril forming or non-fibril forming fluoropolymer such as poly(tetrafluoroethylene) (PTFE). Other exemplary fluoropolymers can comprise units derived from fluorinated monomers such as 3,3,3-trifluoropropene, 3,3,3,4,4-pentafluoro-1-butene, hexafluoropropylene, vinyl fluoride; vinylidene fluoride, 1,2-difluoroethylene, and the like, or a mixture comprising at least one of the foregoing monomers

The fluoropolymer is encapsulated by a rigid copolymer, i.e., a copolymer having a Tg of greater than 10°C and comprising units derived from a monovinyl aromatic monomer and units derived from a $C_{3-6}$ monovinylic monomer.

Monovinylaromatic monomers include vinyl naphthalene, vinyl anthracene, and the like, and monomers of formula (2):

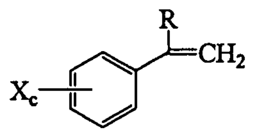

(2)

wherein each X is independently hydrogen, $C_1$-$C_{12}$ alkyl, $C_3$-$C_{12}$ cycloalkyl, $C_6$-$C_{12}$ aryl, $C_7$-$C_{12}$ arylalkyl, $C_7$-$C_{12}$ alkylaryl, $C_1$-$C_{12}$ alkoxy, $C_3$-$C_{12}$ cycloalkoxy, $C_6$-$C_{12}$ aryloxy, chloro, bromo, or hydroxy, c is 0 to 5, and R is hydrogen, $C_1$-$C_5$ alkyl, bromo, or chloro. Exemplary monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds.

Monovinylic monomers include unsaturated monomers such as itaconic acid, acrylamide, N-substituted acrylamide or methacrylamide, maleic anhydride, maleimide, N-alkyl-, aryl-, or haloaryl-substituted maleimide, glycidyl (meth) acrylates, and monomers of the formula (3):

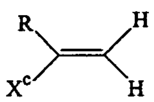

(3)

in wherein R is hydrogen, $C_1$-$C_5$ alkyl, bromo, or chloro, and $X^c$ is cyano, $C_1$-$C_{12}$ alkoxycarbonyl, $C_1$-$C_{12}$ aryloxycarbonyl, hydroxy carbonyl, or the like. Examples of monomers of formula (3) include acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth) acrylate, and the like, and combinations comprising at least one of the foregoing monomers. Monomers such as n-butyl acrylate, ethyl acrylate, and 2-ethylhexyl acrylate are commonly used. Combinations of the foregoing monovinyl monomers and monovinylaromatic monomers can also be used.

In a specific embodiment, the monovinylic aromatic monomer is styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, or a combination thereof, specifically styrene, and the monovinylic monomer is acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, or a combination thereof, specifically acrylonitrile. A useful encapsulated fluoropolymer is PTFE encapsulated in styrene-acrylonitrile (SAN), also known as TSAN.

Encapsulated fluoropolymers can be made by polymerizing the encapsulating polymer in the presence of the fluoropolymer, for example an aqueous dispersion of the fluoropolymer. Alternatively, the fluoropolymer can be preblended with a second polymer, such as for, example, an aromatic polycarbonate or SAN to form an agglomerated material. Either method can be used to produce an encapsulated fluoropolymer. The relative ratio of monovinyl aromatic monomer and monovinylic comonomer in the rigid graft phase can vary widely depending on the type of fluoropolymer, type of monovinylaromatic monomer(s), type of comonomer(s), and the desired properties of the composition. The rigid phase can comprise 10 to 95 wt.% of monovinyl aromatic monomer, specifically about 30 to about 90 wt.%, more specifically 50 to 80 wt.% monovinylaromatic monomer, with the balance of the rigid phase being comonomer(s). The SAN can comprise, for example, about 75 wt.% styrene and about 25 wt.% acrylonitrile based on the total weight of the copolymer. An exemplary TSAN comprises about 50 wt.% PTFE and about 50 wt.% SAN, based on the total weight of the encapsulated fluoropolymer.

The polyester compositions comprise 65 to 94.5 wt.% of the above described polyester having a molecular weight of greater than 70,000 g/mol, 5 to 30 wt.% of the impact modifier, and 0.5 to 5 wt.% of the encapsulated fluoropolymer, each based on the total weight of the composition. Within this range, the relative amount of each component will depend on the type and properties of the polyester, the type and properties (e.g., reactivity) of the impact modifier and the type and properties of the encapsulated fluoropolymer, as well as the desired properties of the polyester composition. Improved properties such as low temperature ductility and chemical resistance can be obtained when the polyester compositions comprise 65 to 91.75 wt.% of the above described polyester having a molecular weight of greater than 70,000 g/mol (for example PET and/or PBT), 7.5 to 30 wt.% of the impact modifier (for example, a terpolymer comprising units derived from ethylene, glycidyl methacrylate, and methyl acrylate), and 0.75 to 5 wt.% of the encapsulated fluoropolymer (for example TSAN), each based on the total weight of the composition. Improved properties can further be obtained when the polyester compositions comprise 85 to 91.75 wt.% of the above described polyester having a molecular weight of greater than 70,000 g/mol (for example PBT), 7.5 to less than 15 wt.% of the impact modifier (for example, a terpolymer comprising units derived from ethylene, glycidyl methacrylate, and methyl acrylate), and 0.75 to 3 wt.% of the encapsulated fluoropolymer (for example TSAN), each based on the total weight of the composition.

The polyester composition can further comprise an optional catalyst and co-catalyst to facilitate reaction between the epoxy groups of the impact modifier and the polyester. If present, the catalyst can be a hydroxide, hydride, amide, carbonate, borate, phosphate, $C_{2-36}$ carboxylate, $C_{2-18}$ enolate, or a $C_{2-36}$ dicarboxylate of an alkali metal such as sodium, potassium, lithium, or cesium, of an alkaline earth metal such as calcium, magnesium, or barium, or other metal such as zinc or a lanthanum metal; a Lewis catalyst such as a tin or titanium compound; a nitrogen-containing compound such as an amine halide or a quaternary ammonium halide (e.g., dodecyltrimethylammonium bromide), or other ammonium salt, including a $C_{1-36}$ tetraalkyl ammonium hydroxide or acetate; a $C_{1-36}$ tetraalkyl phosphonium hydroxide or acetate; or an alkali or alkaline earth metal salt of a negatively charged polymer. Mixtures comprising at least one of the foregoing catalysts can be used, for example a combination of a Lewis acid catalyst and one of the other foregoing catalysts.

Specific exemplary catalysts include but are not limited to alkaline earth metal oxides such as magnesium oxide, calcium oxide, barium oxide, and zinc oxide, tetrabutyl phosphonium acetate, sodium carbonate, sodium bicarbonate, sodium tetraphenyl borate, dibutyl tin oxide, antimony trioxide, sodium acetate, calcium acetate, zinc acetate, magnesium acetate, manganese acetate, lanthanum acetate, sodium benzoate, sodium stearate, sodium benzoate, sodium caproate, potassium oleate, zinc stearate, calcium stearate, magnesium stearate, lanthanum acetylacetonate, sodium polystyrenesulfonate, the alkali or alkaline earth metal salt of a PBT-ionomer, titanium isopropoxide, and tetraammonium hydrogensulfate. Mixtures comprising at least one of the foregoing catalysts can be used.

In another specific embodiment, the catalyst can be a boron-containing compound such as boron oxide, boric acid, a borate salt, or a combination comprising at least one of the foregoing boron-containing compounds. More particularly, boric acid and/or a borate salt is used, even more particularly a borate salt. As used herein, a "borate salt" (or simply "borate") means the salt of a boric acid. There are different boric acids, including metaboric acid ($HBO_2$), orthoboric acid ($H_3BO_3$), tetraboric acid ($H_2B_4O_7$), and pentaboric acid ($HB_5O_9$). Each of these acids can be converted to a salt by reaction with a base. Different bases can be used to make different borates. These include amino compounds, which give ammonium borates, and hydrated metal oxides such as sodium hydroxide, which gives sodium borates. These borates can be hydrated or anhydrous. For example, sodium tetraborate is available in the anhydrous form, and also as the pentahydrate and the decahydrate. Suitable borate salts are alkali metal borates, with sodium, lithium, and potassium being preferred, and with sodium tetraborate being especially suitable. Other suitable metal borates are divalent metal borates, with alkaline earth metal borates being preferred, in particular calcium and magnesium. Trivalent

metal borates, such as aluminum borate, can also be used.

In another embodiment, the catalyst is a salt containing an alkali metal compound, for example an alkali metal halide, an alkali metal $C_{2-36}$ carboxylate, an alkali metal $C_{2-18}$ enolate, an alkali metal carbonate, an alkali metal phosphate, and the like. Illustrative compounds within this class are lithium fluoride, lithium iodide, potassium bromide, potassium iodide, sodium dihydrogen phosphate, sodium acetate, sodium benzoate, sodium caproate, sodium stearate, and sodium ascorbate.

In still another embodiment, a metal salt of an aliphatic carboxylic acid containing at least 18 carbon atoms, particularly an alkali metal stearate such as sodium stearate has certain advantages. For example, use of one of these catalysts allows extrusion of the polyester compositions at substantially higher feed rates than the rates usable in the absence of such catalysts. These catalysts also tend to suppress the formation of acrolein, a by-product from glycidyl reagents. The catalysts can also impart substantially less odor to the composition than certain other compounds useful as catalysts, especially amines.

The type and amount of the catalyst will depend on the desired characteristics of the composition, the type of polyester used, the type and amount of the impact modifier, the type of catalyst, the type and amount of other additives present in the composition, and like considerations, and is selected to provide the desired degree of reaction. Such amounts can be at least 1 part per million (ppm) based on the weight of the total composition. In one embodiment, the amount of the catalyst is 1 ppm to 0.2 wt% of the total weight of the composition.

The polyester compositions can include various additives ordinarily incorporated into resin compositions of this type, with the proviso that the additives are selected so as to not significantly adversely affect the desired properties of the thermoplastic composition. Exemplary additives include other polymers (including other impact modifiers), fillers, antioxidants, thermal stabilizers, light stabilizers, ultraviolet light (UV) absorbing additives, quenchers, plasticizers, lubricants, mold release agents, antistatic agents, visual effect additives such as dyes, pigments, and light effect additives, flame retardants, anti-drip agents, and radiation stabilizers. Combinations of additives can be used. The foregoing additives (except any fillers) are generally present in an amount from 0.005 to 20 wt.%, specifically 0.01 to 10 wt.%, based on the total weight of the composition.

Other polymers that can be combined with the polyesters include polycarbonates, polyamides, polyolefins, poly (arylene ether)s, poly(arylene sulfide)s, polyetherimides, polyvinyl chlorides, polyvinyl chloride copolymers, silicones, silicone copolymers, $C_{1-6}$ alkyl (meth)acrylate polymers (such as poly(methyl methacrylate)), and $C_{1-6}$ alkyl (meth) acrylate copolymers, including other impact modifiers. Such polymers are generally present in amounts of 0 to 10 wt.% of the total composition.

Particulate fillers include, for example, alumina, amorphous silica, anhydrous alumino silicates, mica, wollastonite, barium sulfate, zinc sulfide, clays, talc, and metal oxides such as titanium dioxide, carbon nanotubes, vapor grown carbon nanofibers, tungsten metal, barites, calcium carbonate, milled glass, flaked glass, ground quartz, silica, zeolites, and solid or hollow glass beads or spheres, and fibrillated tetrafluoroethylene. Reinforcing fillers can also be present. Suitable reinforcing fillers include fibers comprising glass, ceramic, or carbon, specifically glass that is relatively soda free, more specifically fibrous glass filaments comprising lime-alumino-borosilicate glass, which are also known as "E" glass. The fibers can have diameters of 6 to 30 micrometers. The fillers can be treated with a variety of coupling agents to improve adhesion to the polymer matrix, for example with amino-, epoxy-, amido- or mercapto-functionalized silanes, as well as with organometallic coupling agents, for example, titanium or zirconium based compounds. Particulate fillers, if present, are used in amounts effective to provide the desired effect (e.g., titanium dioxide in an amount effective to provide ultraviolet light resistance), for example 0.01 to 50 wt.% of the total composition, specifically 0.1 to 20 wt.% of the total composition. Fibrous fillers, if present, are used in amounts effective to provide the desired effect (e.g., strength), without significantly adversely affecting other desired properties of the composition. Exemplary amounts of fibers are 0 to 10 wt.% of the total composition, specifically less than 5 wt.% of the total composition.

The physical properties of the polyester composition (or an article derived from the composition) can be varied, depending on properties desired for the application.

The flexural modulus of the compositions, for instance, is 1800 MPa or greater. The flexural modulus can be measured by a three-point flexural test according to ASTM D790 on 3.2 mm thick test bars.

The IZOD notched impact (INI) of the polyester composition is greater than or equal to 700 J/m. The ductility at Notched Izod impact of the polyester compositions is greater than 80%. The INI and ductility can be measured on 3.2 mm thick test bars according to ASTM D256 at 23°C.

The polyester compositions are manufactured by combining the various components under conditions effective to form reaction products. For example, powdered polyester, impact modifier, encapsulated fluoropolymer, and/or other optional components are first blended, optionally with fillers in a HENSCHEL-Mixer® high speed mixer. Other low shear processes, including but not limited to hand mixing, can also accomplish this blending. The blend is then fed into the throat of a twin-screw extruder via a hopper. Alternatively, one or more of the components can be incorporated into the composition by feeding directly into the extruder at the throat and/or downstream through a sidestuffer. Additives can also be compounded into a masterbatch with a desired polymeric resin and fed into the extruder. The extruder is generally

operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

The polyester compositions can be formed into shaped articles by a variety of known processes for shaping molten polymers, such shaping, extruding, calendaring, thermoforming, casting, or molding the compositions. Molding includes injection molding, rotational molding, compression molding, blow molding, and gas assist injection molding.

The compositions are particularly useful for the manufacture of articles that require excellent impact properties, such as components in fluid dispersing devices, e.g., sprinkler components and the like. In one embodiment, such articles are blow molded and retain their advantageous low temperature ductility. Examples of other articles include electrical connectors, enclosures for electrical equipment, e.g., a battery cover, automotive body parts such as bumper beams, automotive engine parts, components for electronic devices, lighting sockets and reflectors, electric motor parts, power distribution equipment, communication equipment, tiles, e.g., decorative floor tiles.

The polyester compositions are further illustrated by the following non-limiting examples.

## EXAMPLES

The amounts of all components in the Tables below are provided in percent by weight, based on the total weight of the blend components. Components used in the formulations are shown Table 1.

Table 1

| Component | Description |
|---|---|
| PBT195 | Poly(1,4-butylene terephthalate), intrinsic viscosity of 0.66 dl/g as measured in a 60:40 phenol/ tetrachloroethane mixture, 53400 g/mol of weight-average molecular weight measured in 5/95 volume % hexafluoroisopropyl alcohol/chloroform solution by gel permeation chromatography with polystyrene standards, from GE Plastics. |
| PBT315 | Poly(1,4-butylene terephthalate), intrinsic viscosity of 1.2 dl/g as measured in a 60:40 phenol/ tetrachloroethane mixture, 104000 g/mol of weight-average molecular weight measured in 5/95 volume % hexafluoroisopropyl alcohol/chloroform solution by gel permeation chromatography with polystyrene standards, from GE Plastics. |
| PBT91 | Physical blend of 75% PBT315 and 25% PBT195. Calculated weight average molecular weight is 91,400 g/mol. |
| PBT79 | Physical blend of 50% PBT315 and 50% PBT195. Calculated weight average molecular weight is 78700 g/mol. |
| PBT66 | Physical blend of 25% PBT315 and 75% PBT195. Calculated weight average molecular weight is 66000 g/mol. |
| TSAN | 50/50 wt.% poly(tetrafluoroethylene) blended with poly(styrene-co-acrylonitrile) from GE Plastics. |
| LOTADER | Random terpolymer of ethylene, acrylic ester, and glycidyl methacrylate ester, sold as LOTADER AX8900 from Arkema, Inc. |
| AO1010 | Pentaerythritol tetrakis(3,5-di-tert-butyl-4-hydroxyhydrocinnamate) (hindered phenol), sold as IRAGANOX 1010 from Ciba-Geigy. |
| PETS | Pentaerythritol tetrastearate |
| UV5411 | (2-(2' Hydroxy-5-T-octylphenyl)-benzotriazole), sold as CYASORB UV 5411 from Ciba-Geigy |

In the examples that follow, the components of the compositions were tumble blended compounded on a 27 mm twin screw extruder with a vacuum vented mixing screw, at a barrel and die head temperature of 240 to 265°C, and a screw speed of 300 revolutions per minute (rpm). The extrudate was cooled through a water bath, and then pelletized. The pellets were dried for 3 to 4 hours at 120°C in a forced-air circulating oven before injection molding. Test articles (ASTM Izod and Flexural bars) were injection molded on a van Dom molding machine with a set temperature of about 240 to 265°C. It will be recognized by those skilled in the art that the method is not limited to these temperatures or to this apparatus.

Izod Notched Impact (INI) testing was performed on 75 x 12.5 x 3.2 mm) bars according to ASTM D256 at 23°C. Flexural properties or three point bending were measured at 23°C on the same size bars according to ASTM 790.

Molecular weight was determined by gel permeation chromatography (GPC). A Waters 2695 separation module equipped with a single PL HFIP gel (250 x 4.6 mm) and a Waters 2487 Dual Wavelength Absorbance Detector (signals observed at 273 nm) were used for GPC analysis. Typically, samples were prepared by dissolving 50 mg of the polymer pellets in 50 mL of 5/95 volume % hexafluoroisopropyl alcohol/chloroform solution. The results were processed using a Millennium 32 Chromatography Manager V 4.0. Reported molecular weights are relative to polystyrene standards. As used herein, "molecular weight" refers to weight average molecular weight (Mw).

Examples E1-E3 and Comparative Examples C1-C5.

The following examples (Table 2) were formulated to show the effect of the use of an encapsulated fluoropolymer on the impact properties of polyesters and the impact modifiers described herein.

Table 2.

| Formulation | unit | C1 | C2 | C3 | E1 | C4 | E2 | C5 | E3 |
|---|---|---|---|---|---|---|---|---|---|
| PBT315 | % | 94.6 | 93.6 | 89.6 | 88.6 | 84.6 | 83.6 | 79.6 | 78.6 |
| LOTADER | % | 5 | 5 | 10 | 10 | 15 | 15 | 20 | 20 |
| TSAN | % | 0.0 | 1.0 | 0.0 | 1.0 | 0.0 | 1.0 | 0.0 | 1.0 |
| IRAGANOX | | 0.1 | 0.1 | 0.1 | 0.1 | 0.1 | 0.1 | 0.1 | 0.1 |
| 1010 | % | | | | | | | | |
| PETS | % | 0.3 | 0.3 | 0.3 | 0.3 | 0.3 | 0.3 | 0.3 | 0.3 |
| Properties | | | | | | | | | |
| Flexural Modulus | MPa | 2300 | 2380 | 2000 | 2240 | 1740 | 1750 | 1510 | 1690 |
| Notched Izod | | | 91 | | 872 | | 1240 | | 1140 |
| Impact at 23°C | J/m | 79 | | 647 | | 966 | | 1170 | |
| Notched Izod | | | 0 | | 100 | | 100 | | 100 |
| Impact at 23°C | %ductility | 0 | | 100 | | 100 | | 100 | |

Comparative Examples C1, C3, C4, and C5 show that the presence of an ethylene/methacrylate/glycidyl methacrylate impact modifier increases notched Izod impact properties, and that higher amounts of the impact modifier, increased notched Izod impact but decreased the flexural modulus of samples molded from the compositions. In contrast, addition of 1% TSAN improved not only notched Izod impact but also stiffness as shown in examples E1-E3. The effect of TSAN on notched Izod impact was not significant when the content of LOTADER is higher as in C4 and E4.

Examples E5-E7 and Comparative Examples C5-C9.

The following examples (Table 3) were formulated to show the effect of the molecular weight of the polyester on the impact properties of polyester compositions described herein.

Table 3.

| Formulation | unit | C5 | E5 | C6 | E6 | C7 | E7 | C8 | C9 |
|---|---|---|---|---|---|---|---|---|---|
| PBT315 (Mw=106 kg/mol) | % | 86.8 | 85.8 | | | | | | |
| PBT91 (Mw=91 kg/mol) | % | | | 89.7 | 88.7 | | | | |
| PBT79 (Mw=79 kg/mol) | % | | | | | 89.7 | 88.7 | | |
| PBT66 (Mw=66 kg/mol) | % | | | | | | | 89.7 | 88.7 |
| LOTADER | % | 10 | 10 | 10 | 10 | 10 | 10 | 10 | 10 |
| TSAN | % | 0.0 | 1.0 | 0.0 | 1.0 | 0.0 | 1.0 | 0.0 | 1.0 |
| AO1010 | % | 0.10 | 0.10 | 0.10 | 0.10 | 0.10 | 0.10 | 0.10 | 0.10 |
| PETS | | 0.20 | 0.20 | 0.20 | 0.20 | 0.20 | 0.20 | 0.20 | 0.20 |
| Properties | | | | | | | | | |
| Flexural Modulus | MPa | 1940 | 2060 | 2010 | 2090 | 1990 | 2080 | 2020 | 1980 |
| Notched Izod Impact at 23°C | J/m | 834 | 1160 | 626 | 1180 | 480 | 1090 | 381 | 203 |

The above results shown that in comparative examples C5-C7 and examples E5-E7 (with weight-average molecular weight of 79 kg/mol or higher), the addition of 1% TSAN substantially increased notched Izod impact and flexural modulus. However, when the molecular weight was low, the addition of TSAN did not improve flexural modulus or notched Izod impact.

Examples E8-E10 and Comparative Examples C10-C11.

The effect of amount of TSAN on physical properties of the polyester compositions is shown in Table 4.

Table 4.

| Formulation | unit | C10 | C11 | E8 | E9 | E10 |
|---|---|---|---|---|---|---|
| PBT315 | % | 86.8 | 89.2 | 88.7 | 88.2 | 87.7 |
| LOTADER | % | 10 | 10 | 10 | 10 | 10 |
| TSAN | % | 0.0 | 0.50 | 1.0 | 1.5 | 2.0 |
| AO1010 | % | 0.10 | 0.10 | 0.10 | 0.10 | 0.10 |
| PETS | % | 0.20 | 0.20 | 0.20 | 0.20 | 0.20 |
| Physical properties | | | | | | |
| Flexural Modulus | MPa | 1940 | 1970 | 1970 | 2070 | 2100 |
| Notched Izod Impact at 23°C | J/m | 834 | 761 | 1010 | 1230 | 1260 |

The results in Table 4m Comparative example C11, show that use of 0.5% TSAN did not improve notched Izod impact. At higher level of TSAN (1.0% or above), Notched Izod impact and flexural modulus was substantially improved (examples E8-E10 vs. comparative example C10-C11).

Flexural module and notched Izod of various samples with and without TSAN were plotted. The plot (Figure 1) shows a correlation between flexural modulus and notched Izod for samples with TSAN as follows:

$$FM + 1.27\ NI > 3000$$

wherein FM is flexural modulus (MPa) and NI is notched Izod impact (J/m), each measured at 23°C.

While the invention has been illustrated and described in typical embodiments, it is not intended to be limited to the details shown, since various modifications and substitutions are possible without departing from the spirit of the present invention. As such, modifications and equivalents of the invention herein disclosed may occur to persons skilled in the art using no more than routine experimentation, and all such modifications and equivalents are believed to be within the spirit and scope of the invention as defined by the following claims.

## Claims

**1.** A polyester composition comprising, based on the total weight of the composition, a reaction product of:

(a) 65 to 94.5 weight percent of a polyester having a weight average molecular weight of greater than or equal to 70,000 g/mol, wherein the polyester is of the formula

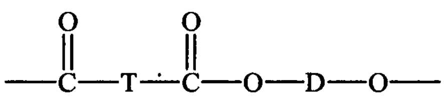

wherein each T is independently the same or different divalent $C_{6-10}$ aromatic group derived from a dicarboxylic acid or a chemical equivalent thereof, and each D is independently the same or different divalent $C_{2-4}$ aliphatic group derived from a dihydroxy compound or a chemical equivalent thereof;
(b) 5 to 30 weight percent of an impact modifier copolymer comprising units derived from a $C_{2-20}$ olefin and

units derived from a glycidyl (meth)acrylate; and
(c) 0.5 to 5 weight percent of a particulate fluoropolymer encapsulated by a copolymer having a Tg of greater than 10°C and comprising units derived from a monovinyl aromatic monomer and units derived from a $C_{3-6}$ monovinylic monomer; and

wherein the composition has less than 70 weight percent of a polyester derived from a dicarboxylic acid or a chemical equivalent thereof, and an aliphatic diol or a chemical equivalent thereof selected from the group consisting of 1,3-propylene glycol, neopentyl glycol, 1,5-pentanediol, 1,6-hexanediol, decamethylene glycol, cyclohexanediol, 1,4-cyclohexanedimethanol, and a combination thereof.

**2.** The composition of Claim 1, wherein the polyester is poly(ethylene terephthalate), poly(1,4-butylene terephthalate), poly(ethylene naphthalate), poly(butylene naphthalate), (polytrimethylene terephthalate), or a combination thereof.

**3.** The composition of any of Claims 1 - 2, wherein the polyester is poly(ethylene terephthalate), poly(1,4-butylene terephthalate), or a combination thereof.

**4.** The composition of Claim 1, wherein the polyester is poly(1,4-butylene terephthalate), the olefin is ethylene and the glycidyl (meth)acrylate is glycidyl methacrylate.

**5.** The composition of any of Claims 1 - 4, wherein the impact modifier copolymer further comprises additional units derived from $C_{1-20}$ alkyl (meth)acrylate.

**6.** The composition of any of Claims 1 - 5, wherein the impact modifier comprises units derived from ethylene, glycidyl methacrylate, butyl acrylate, ethyl acrylate, methyl acrylate, or a combination thereof.

**7.** The composition of any of Claims 1 - 6, wherein the fluoropolymer is poly(tetrafluoroethylene) and the copolymer is styrene-acrylonitrile.

**8.** The composition of any of Claims 1 - 7, wherein the monovinyl aromatic monomer is of the formula

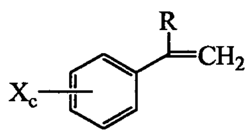

wherein each X is independently hydrogen, $C_1$-$C_{12}$ alkyl, $C_3$-$C_{12}$ cycloalkyl, $C_6$-$C_{12}$ aryl, $C_7$-$C_{12}$ arylalkyl, $C_7$-$C_{12}$ alkylaryl, $C_1$-$C_{12}$ alkoxy, $C_3$-$C_{12}$ cycloalkoxy, $C_6$-$C_{12}$ aryloxy, chloro, bromo, or hydroxy, c is 0 to 5, and R is hydrogen, $C_1$-$C_5$ alkyl, bromo, or chloro, and the $C_{3-6}$ monovinylic monomer is of the formula

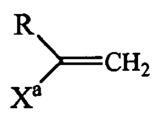

wherein R is hydrogen, $C_1$-$C_5$ alkyl, bromo, or chloro, and X is cyano, $C_1$-$C_{12}$ alkoxycarbonyl, $C_1$-$C_{12}$ aryloxycarbonyl, or hydroxy carbonyl.

**9.** The composition of any of Claims 1 - 8, wherein the monovinylaromatic monomer is styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, or a combination thereof, and the $C_{3-6}$ monovinylic monomer is acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, or a combination thereof.

**10.** The composition of any of Claims 1 - 9, further comprising a catalyst, wherein the catalyst is a hydroxide, hydride, amide, carbonate, borate, phosphate, $C_{2-36}$ carboxylate, $C_{2-18}$ enolate, or $C_{2-36}$ dicarboxylate of an alkali metal, an

alkaline earth metal, zinc, or a lanthanum metal; a Lewis catalyst; a nitrogen-containing compound; a boron-containing compound; or an alkali or alkaline earth metal salt of a negatively charged polymer.

**11.** A method for the manufacture of the composition of any of Claims 1 - 10, comprising reacting the components of the composition of any of Claims 1 - 10.

**12.** An article comprising the composition of any of Claims 1 - 10.

**13.** A method of forming an article, comprising shaping, extruding, calendaring, or molding the composition of any of Claims 1 - 10 to form the article.

**14.** The method for forming an article of Claim 13, comprising injection molding, rotationally molding, compression molding, blow molding, or gas assisted injection molding to form the article.

**15.** The composition of any of Claims 1 - 10, comprising, based on the total weight of the composition, a reaction product of:

65 to 91.75 weight percent of a polyester having a weight average molecular weight of greater than or equal to 70,000 g/mol, wherein the polyester comprises poly(ethylene terephthalate) and/or poly(1,4-butylene terephthalate);
7.5 to 30 weight percent of an impact modifier copolymer comprising units derived from ethylene, glycidyl methacrylate, and a $C_{1-4}$ alkyl (meth)acrylate; and
0.75 to 5 weight percent of poly(tetrafluoroethylene) encapsulated by a copolymer having a Tg of greater than 10°C and comprising units derived from a styrene or styrene derivative and acrylonitrile;

wherein the composition has a flexural modulus and a ductility and the flexural modulus and ductility of the composition meet the condition:

$$FM + 1.27\ NI > 3000$$

wherein FM is Flexural Modulus (MPa) and NI is Notched Izod impact (J/m), each measured with 3.2 mm thick bars at 23° C in accordance with ASTM 790 and ASTM D256, respectively.

## Patentansprüche

**1.** Polyesterzusammensetzung, umfassend, bezogen auf das Gesamtgewicht der Zusammensetzung, ein Reaktionsprodukt aus:

(a) 65 bis 94,5 Gew.-% eines Polyesters mit einem mittleren Moleklargewicht von größer oder gleich 70.000 g/mol, wobei der Polyester die folgende Formel aufweist:

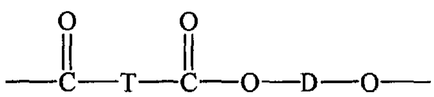

wobei jeder Rest T, unabhängig voneinander, die gleiche oder eine unterschiedliche $C_{6-10}$-Aromatengruppe ist, die von einer Dicarbonsäure oder einem chemischen Äquivalent davon abgeleitet ist, und jeder Rest D, unabhängig voneinander, die gleiche oder eine unterschiedliche $C_{2-4}$-Aliphatengruppe ist, die von einer Dihydroxyverbindung oder einem chemischen Äquivalent davon abgeleitet ist;
(b) 5 bis 30 Gew.-% eines Schlagzähigkeitsverbesserer-Copolymers, das Einheiten umfasst, die von einem $C_{2-20}$-Olefin abgeleitet sind, und Einheiten, die von einem Glycidyl(meth)acrylat abgeleitet sind; und
(c) 0,5 bis 5 Gew.-% eines dispersen Fluorpolymers, das umhüllt ist mit einem Copolymer mit einer Glasübergangstemperatur $T_g$ größer als 10°C und Einheiten umfasst, die von einem aromatischen Monovinyl-Monomer abgeleitet sind, und Einheiten, die von einem $C_{3-6}$-Monovinyl- Monomer abgeleitet sind; und

wobei die Zusammensetzung weniger als 70 Gew.-% eines Polyesters aufweist, der von einer Dicarbonsäure oder einem chemischen Äquivalent stammt, und einem aliphatischen Diol oder einem chemischen Äquivalent davon, ausgewählt aus der Gruppe, die aus 1,3-Propylenglycol, Neopentylglycol, 1,5-Pentandiol, 1,6-Hexandiol, Decamethylenglycol, Cyclohexandiol, 1,4-Cyclohexandimethanol und einer Kombination davon besteht.

**2.** Zusammensetzung nach Anspruch 1, bei der der Polyester Polyethylenterephthalat, Poly(1,4-butylenterephthalat), Polyethylennaphthalat, Polybutylennaphthalat, Polytrimethylenterephthalat oder eine Kombination davon ist.

**3.** Zusammensetzung nach Anspruch 1 oder 2, bei der der Polyester Polyethylenterephthalat, Poly(1,4-butylenterephthaiat) oder eine Kombination davon ist.

**4.** Zusammensetzung nach Anspruch 1, bei der der Polyester Poly(1,4-butylenterephthalat), das Olefin Ethylen und das Glycidyl(meth)acrylat Glycidylmethacrylat ist.

**5.** Zusammensetzung nach einem der Ansprüche 1 bis 4, bei der das Schlagzähigkeitsverbesserer-Coplymer ferner zusätzliche Einheiten umfasst, die von $C_{1-20}$-Alkyl(meth)acrylat abgeleitet sind.

**6.** Zusammensetzung nach einem der Ansprüche 1 bis 5, bei der der Schlagzähigkeitsverbesserer Einheiten umfasst, die von Ethylen, Glycidylmethacrylat, Butylacrylat, Ethylacrylat, Methylacrylat oder einer Kombination davon abgeleitet sind.

**7.** Zusammensetzung nach einem der Ansprüche 1 bis 6, bei der das Fluorpolymer Polytetrafluorethylen und das Copolymer Styrol-Acrylnitril ist.

**8.** Zusammensetzung nach einem der Ansprüche 1 bis 7, bei der das aromatische Monovinyl-Monomer die folgende Formel aufweist:

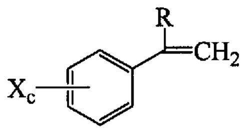

wobei jeder Rest X, unabhängig voneinander, Wasserstoff, $C_1$-$C_{12}$-Alkyl, $C_3$-$C_{12}$-Cydoalkyl, $C_6$-$C_{12}$-Aryl, $C_7$-$C_{12}$-Arylalkyl, $C_7$-$C_{12}$-Alkylaryl, $C_1$-$C_{12}$-Alkoxy, $C_3$-$C_{12}$-Cycloalkoxy, $C_6$-$C_{12}$-Aryloxy, Chlor, Brom oder Hydroxy ist, c 0 bis 5 ist, und der Rest R Wasserstoff, $C_1$-$C_5$-Alkyl, Brom oder Chlor ist, und das $C_{3-6}$-Monovinyl-Monomer die folgende Formel aufweist:

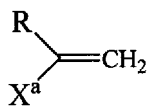

wobei der Rest R Wasserstoff, $C_1$-$C_5$-Alkyl, Brom oder Chlor ist, und der Rest X Cyano, $C_1$-$C_{12}$-Alkoxycarbonyl, $C_1$-$C_{12}$-Aryloxycarbonyl oder Hydroxycarbonyl ist.

**9.** Zusammensetzung nach einem der Ansprüche 1 bis 8, bei der das aromatische Monovinyl-Monomer Styrol, 3-Methylstyrol, 3,5-Diethylstyrol, 4-n-Propylstyrol, α-Methylstyrol, α-Methylvinyltoluol, α-Chlorstyrol, α-Bromstyrol, Dichlorstyrol, Dibromstyrol, Tetrachlorstyrol oder eine Kombination davon ist, und das $C_{3-6}$-Monovinyl-Monomer Acrylnitril, Methacrylnitril, α-Chloracrylnitril, β-Chloracrylnitril, α-Bromacrylnitril, Acrylsäure, Methyl(meth)acrylat, Ethyl (meth)acrylat, n-Butyl(meth)acrylat, t-Butyl(meth)acrylat, n-Propyl(meth)acrylat, Isopropyl(meth)acrylat, 2-Ethylhexyl(meth)acrylat oder eine Kombination davon ist.

**10.** Zusammensetzung nach einem der Ansprüche 1 bis 9, die ferner einen Katalysator umfasst, wobei der Katalysator ein Hydroxid, Hydrid, Amid, Carbonat, Borat, Phosphat, $C_{2-36}$-Carboxylat, $C_{2-18}$-Enolat oder $C_{2-36}$-Dicarboxylat eines Alkalimetalls, eines Erdalkalimetalls, von Zink, oder eines Lanthanmetalls; ein Lewis-Katalysator; eine Stickstoff enthaltende Verbindung; eine Bor enthaltende Verbindung oder ein Alkali- oder Erdalkalimetallsalz eines negativ geladenen Polymers ist.

**11.** Verfahren zur Herstellung der Zusammensetzung gemäß einem der Ansprüche 1 bis 10, umfassend das Umsetzen der Komponenten der Zusammensetzung gemäß einem der Ansprüche 1 bis 10.

**12.** Gegenstand, umfassend die Zusammensetzung gemäß einem der Ansprüche 1 bis 10.

**13.** Verfahren zum Bilden eines Gegenstands, umfassend das Formen, Extrudieren, Kalandrieren oder Gießen der Zusammensetzung gemäß einem der Ansprüche 1 bis 10, um den Gegenstand zu bilden.

**14.** Verfahren zum Bilden des Gegenstands nach Anspruch 13, umfassend Spritzgießen, Rotationsformen, Formpressen, Blasformen oder Gas unterstütztes Spritzgießen, um den Gegenstand zu bilden.

**15.** Zusammensetzung nach einem der Ansprüche 1 bis 10, umfassend, bezogen auf das Gesamtgewicht der Zusammensetzung, ein Reaktionsprodukt aus:

65 bis 91,75 Gew.-% eines Polyesters mit einem mittleren Moleklargewicht von größer oder gleich 70.000 g/mol, wobei der Polyester Polyethylenterephthalat und/oder Poly(1,4-butylenterephthalat) umfasst;
7,5 bis 30 Gew.-% eines Schlagzähigkeitsverbesserer-Copolymers, das Einheiten umfasst, die von Ethylen, Glycidylmethacrylat und einem $C_{1-4}$-Alkyl(meth)acrylat abgeleitet sind; und
0,75 bis 5 Gew.-% Polytetrafluorethylen, das umhüllt ist mit einem Copolymer mit einer Glasübergangstemperatur $T_g$ größer als 10°C und Einheiten umfasst, die von Styrol oder einem Styrolderivat und Acrylnitril abgeleitet sind;
wobei die Zusammensetzung ein Elastizitätsmodul und eine Verformbarkeit aufweist, und wobei das Elastizitätsmodul und die Verformbarkeit der Zusammensetzung die folgende Bedingung erfüllen:

$$FM + 1{,}27\ NI > 3000$$

wobei FM das Elastizitätsmodul (in MPa) ist, und NI der Izod-Kerbschlagwert (in J/m) ist, und jeweils mit 3,2 mm dicken Stäben bei 23°C in Übereinstimmung mit ASTM 790 bzw. ASTM D256 gemessen wurde.

## Revendications

**1.** Composition de polyester comprenant, en fonction du poids total de la composition, un produit de réaction de :

(a) 65 à 94,5% en poids d'un polyester ayant un poids moyen moléculaire supérieur ou égal à 70.000 g/mol, dans laquelle le polyester est de la formule suivante

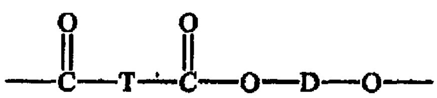

pour laquelle chaque T est indépendamment le même ou différent du groupe aromatique divalent $C_{6-10}$ dérivé d'un acide dicarboxylique ou d'un équivalent chimique de celui-ci, et chaque D est indépendamment le même ou différent du groupe aliphatique divalent $C_{2-4}$ dérivé d'une composé dihydroxy ou d'un équivalent chimique de celui-ci ;
(b) 5 à 30% en poids d'un modificateur d'impact copolymère comprenant des unités dérivées d'une oléfine $C_{2-20}$ et d'unités dérivées d'un (méth)acrylate de glycidyle ; et
(c) 0,5 à 5% en poids d'un fluoropolymère sous forme de particules encapsulées par un copolymère ayant une Tg supérieure à 10°C et comprenant des unités dérivées d'un monomère aromatique de monovinyle et des unités dérivées d'un monomère de monovinyle $C_{3-6}$ ; et

dans laquelle la composition possède moins de 70% en poids d'un polyester dérivé d'un acide dicarboxylique ou d'un équivalent chimique de celui-ci, et un diol aliphatique ou un équivalent chimique de celui-ci sélectionné parmi le groupe composé de 1,3-propylène glycol, de néopentyl glycol, de 1,5-pentanediol, de 1,6-hexanediol, de decaméthylène glycol, de cyclohexanediol, de 1,4-cyclohexanedimethanol et d'une combinaison de ceux-ci.

2. Composition selon la revendication 1 dans laquelle le polyester est du poly(éthylène téréphtalate), du poly(1,4-butylène téréphtalate), du poly(éthylène naphtalate), du poly(butylène naphtalate), du poly(triméthylène téréphtalate), ou une combinaison de ceux-ci.

3. Composition selon l'une des revendications 1 - 2 dans laquelle le polyester est du poly(ethylène téréphtalate), du poly(1,4-butylène téréphtalate), ou une combinaison de ceux-ci.

4. Composition selon la revendication 1, dans laquelle le polyester est du poly(1,4-butylène téréphtalate)), l'oléfine est de l'éthylène et le (méth)acrylate de glycidyle est du méthacrylate de glycidyle.

5. Composition selon l'une des revendications 1 - 4 dans laquelle le modificateur d'impact copolymère comprend en outre des unités additionnelles dérivées du (méth)acrylate d'alkyle $C_{1-20}$.

6. Composition selon l'une des revendications 1 - 5 dans laquelle le modificateur d'impact comprend des unités dérivées d'éthylène, de (méth)acrylate de glycidyle, d'acrylate de butyle, d'acrylate d'éthyle , d'acrylate de méthyle ou des combinaison de ceux-ci.

7. Composition selon l'une des revendications 1 - 6 dans laquelle le fluoropolymère est du poly(tétrafluoroéthylène) et le copolymère est d'acrylonitrile styrène.

8. Composition selon l'une quelconque des revendications 1 - 7 dans laquelle le monomère aromatique de monovinyle est de la formule suivante

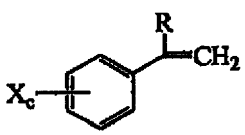

dans laquelle chaque X est respectivement de l'hydrogène, de l'alkyle $C_{1-12}$, du cycloalkyle $C_{3-12}$, de l'aryle $C_{6-12}$, de l'arylalkyle $C_{7-12}$, de l'alkylaryle $C_{7-12}$, de l'alkoxy $C_{1-12}$, du cycloalkoxy $C_{3-12}$, de l'aryloxy $C_{6-12}$, du chlore, du brome ou de l'hydroxy, c est de 0 à 5, et R est de l'hydrogène, de l'alkyle $C_{1-5}$, du brome ou chlore, et le monomère de monovinyle $C_{3-6}$, est de la formule suivante

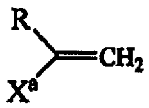

dans laquelle R est de l'hydrogène, de l'alkyle $C_{1-5}$, du brome ou du chlore, et X est du cyanure, de l'alkoxycarbonyle $C_{1-12}$, de l'aryloxycarbonyle $C_{1-12}$, ou de l'hydroxycarbonyle.

9. Composition selon l'une des revendications 1 - 8 dans laquelle le monomère aromatique de monovinyle est du styrène, du 3-méthylstyrène, du 3,5-diethylstyrène, du 4-n-propylstyrène, de l'alpha-methylstyrène, de l'alpha-methylvinyltoluène, de l'alpha-chlorostyrène, de l'alpha-bromostyrène, du dichlorostyrène, du dibromostyrène, du tetrachlorostyrène ou une combinaison de ceux-ci, et le monomère de monovinyle $C_{3-6}$ est de l'acrylonitrile, du methacrylonitrile, de l'alpha-chloroacrylonitrile, du beta-chloroacrylonitrile, de l'alpha-bromoacrylonitrile, de l'acide arcylique, du (méth)acrylate de méthyle, du (meth)acrylate d'éthyle, du (méth)acrylate de n-butyle ,du (méth)acrylate de t-butyle , du (méth)acrylate de n-propyle , de (méth)acrylate d'isopropyle, du (méth)acrylate de 2-ethylhexyle ou une combinaison de ceux-ci.

**10.** Composition selon l'une des revendications 1 - 9, comprenant en outre un catalyseur dans lequel le catalyseur est un hydrogène, de l'hydride, de l'amide, du carbonate, du borate, du phosphate, du carboxylate $C_{2-36}$, de l'enolate $C_{2-18}$, ou du dicarboxylate $C_{2-36}$ d'un métal alcalin, d'un métal alcalinoterreux, de zinc ou d'un métal de lanthane ; un catalyseur de Lewis ; un composé contenant de l'azote ; un composé contenant du borane ; ou un sel de métal alcalin ou de métal alcalinoterreux d'un polymère chargé négativement.

**11.** Procédé pour la fabrication de la composition selon l'une des revendications 1 - 10 comprenant la réaction des composants de la composition selon l'une des revendications 1 - 10.

**12.** Article comprenant la composition selon l'une des revendications 1 - 10.

**13.** Procédé pour former un article, comprenant les étapes de formation, d'extrudation, de calandrage ou de moulage de la composition selon l'une des revendications 1 - 10 pour former l'article.

**14.** Procédé pour former un article selon la revendication 13, comprenant les étapes de moulage par injection, de moulage par rotation, de moulage par compression, de moulage par soufflage, de moulage par injection assisté par gaz pour former l'article.

**15.** Composition selon l'une des revendications 1 - 10 comprenant, en fonction du poids total de la composition, un produit de réaction de :

65 à 94,5% en poids d'un polyester ayant un poids moyen moléculaire supérieur ou égal à 70.000 g/mol, dans laquelle le polyester comprend du poly(éthylène téréphtalate) et/ou du poly(1,4-butylène téréphtalate) ;
7,5 à 30% en poids d'un modificateur d'impact copolymère comprenant des motifs dérivés d'éthylène, du (méth)acrylate de glycidyle et du (méth)acrylate d'alkyle $C_{1-4}$ ; et
0,75 à 5% en poids de poly(tétrafluoroéthylène) encapsulé par un copolymère ayant une Tg supérieure à 10°C et comprenant des unités dérivées d'un styrène ou d'un styrène dérivé et d'acrylonitrile ;

dans laquelle la composition a un module de flexion et une ductilité et pour laquelle le module de flexion et la ductilité de la composition satisfont la condition suivante :

$$FM + 1{,}27\ NI > 3000$$

pour laquelle FM est le module de flexion (Mpa) et NI est la résistance au choc Izod avec encoche (J/m), tous deux mesurés avec des barres de 3,2mm d'épaisseur à 23 °C selon les normes ASTM 790 et ASTM D265 respectivement.

Figure 1

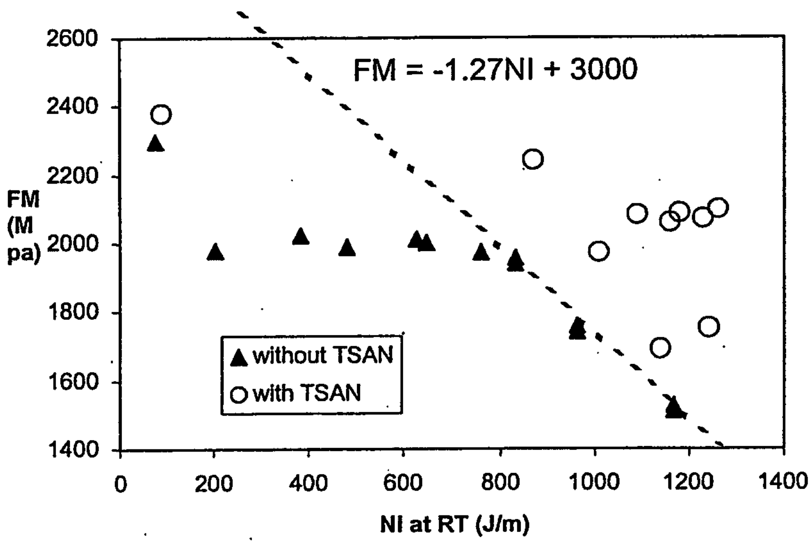
FM = -1.27NI + 3000
FM (Mpa)
2600
2400
2200
2000
1800
1600
1400
0
200
400
600
800
1000
1200
1400
NI at RT (J/m)
without TSAN
with TSAN